# EUROPÄISCHE PATENTSCHRIFT

(11) **EP 2 281 138 B1**
(45) Veröffentlichungstag und Bekanntmachung des Hinweises auf die Patenterteilung: **10.10.2012**
(21) Anmeldenummer: 09733586.3
(22) Anmeldetag: 07.04.2009
(51) Int. Cl.: F24F 13/08, F16L 43/00, F15D 1/04, F24F 13/02

(54) **STRÖMUNGSOPTIMIERTER ROHRBOGEN**
FLOW-OPTIMIZED PIPE ELBOW
COUDE TUBULAIRE À ÉCOULEMENT OPTIMISÉ

(30) Priorität: 17.04.2008 DE 102008019432
(43) Veröffentlichungstag der Anmeldung: 09.02.2011
(73) Patentinhaber: Naber Holding GmbH & Co. KG, 48529 Nordhorn (DE)
(72) Erfinder: FRIEBEL, Wolf-Christoph, 49134 Wallenhorst (DE); NABER, Hans-Joachim, 48527 Nordhorn (DE)
(74) Vertreter: Tönhardt, Marion
(86) Internationale Anmeldenummer: PCT/DE2009/000479
(87) Internationale Veröffentlichungsnummer: WO 2009/127192

(56) Entgegenhaltungen:
- WO-A1-00/17562
- US-A- 2 590 797
- US-A- 5 054 819
- US-A1- 2004 065 375

## Beschreibung

Die Erfindung betrifft einen Rohrbogen für Fluidkanäle mit einer ersten Wand variierender Krümmung, mit einer zweiten Wand variierender Krümmung und mit einer variierenden Querschnittsfläche, wobei die Krümmung der ersten Wand und die Krümmung der zweiten Wand darauf ausgelegt sind, einen für ein den Rohrbogen durchströmendes Fluid minimalen Druckverlust zwischen einem Rohrbogeneingang und einem Rohrbogenausgang zu bewirken, dass sie also derart und im wesentlichen ohne feste Symmetrie zueinander so gewählt sind, dass sich im Betrieb der gewünschte minimale Druckverlust zwischen einem Rohrbogeneingang und einem Rohrbogenausgang ergibt.

Aus dem Stand der Technik bekannte Rohrbögen weisen in der Regel eine parallel oder symmetrisch um eine Achse angeordnete Rohrbewandung auf. Derartige gekrümmte Rohrbogenelemente haben meistens den Nachteil, dass der Luftstrom durch die abrupte Richtungsänderung stark gestört wird und dieser sich dadurch zum Beispiel von der Rohrwand löst, was im folgenden einen Übergang von laminarer zu turbulenter oder zumindest teilturbulenter Strömung begründet. Wirbel, Querströmung und Wandreibung fördern die Entstehung von Rohrbogenverlusten. Neben der daraus resultierenden nicht unerheblichen Energiedissipation geht die abrupte Stromrichtungsänderung im Rohrbogenelement durch die entstehenden Wirbel und Querströmungen auch stets mit einer erhöhten Geräuschentwicklung einher, was je nach Anwendung als störend empfunden werden kann.

Untersuchungen haben ergeben, dass es bei herkömmlichen Rohrbögen mit kleinen Querschnitten insbesondere in Bereichen in Strömungsrichtung unmittelbar hinter dem Rohrbogen zu nicht unerheblichen Rückströmgebieten oder zu toten Räumen kommt, direkt angrenzend an Gebiete mit überhöhten Strömungsgeschwindigkeiten. Dieser starke Strömungsgeschwindigkeitsgradient über die Rohrbogenquerschnittsfläche ist in Anbetracht der daraus entstehenden Wirbel und Querströmungen sowie wegen der erhöhten Wandreibung und des daraus resultierenden hohen Druckverlustes zwischen Rohrbogeneingang und Rohrbogenausgang nicht erstrebenswert.

Die US-A-2 590 797 offenbart einen 90°-Rohrbogen für Fluidkanäle, welcher zur Minimierung des Druckverlustes zwischen seinem Eingang und seinem Ausgang die Verwendung eines Leitbleches vorsieht, welches im Inneren des Rohrbogens seiner innen liegenden Rohrbogenwand zugeordnet ist. Es kann auch vorgesehen sein, den Rohrbogen an der Innenseite der außen liegenden Rohrbogenwand mit einem Leitblech zu versehen. Dabei steht der Krümmungsradius des Leitblechs, welches der innen liegenden Rohrbogenwand zugeordnet ist, in einem vorgegebenen Verhältnis zu einer Abmessung des Rohrbogens, ist vorzugsweise kreisförmig gebogen und deckt einen Winkelbereich von 180° ab, wobei der sich ergebende Durchmesser des Leitbleches gerade einer Abmessung des Rohrbogens entsprechen soll. Von der oben beschriebenen Geometrie abweichende Leitbleche sollen nicht verwendet werden.

Die DE 195 42 175 A1 offenbart ein gekrümmtes Verbindungsstück und Verfahren zu dessen Herstellung, wobei das Verbindungsstück eine über seine Länge im wesentlichen konstante Querschnittsfläche besitzt und wobei das Verbindungsstück eine Krümmung aufweist, die zwischen den Enden durch eine Funktion beschrieben ist, die mindestens ein Maximum an einem Punkt oder in einem Abschnitt hat und den stets parallel angeordneten Außenwänden des Verbindungsstücks einen Verlauf mit variierendem Radius bezüglich eines gegebenen Bezugspunktes aufprägt.

Es hat sich herausgestellt, dass bei der Gestaltung von Rohrbögen die Beschränkung auf im wesentlichen konstante Querschnittsflächen nur stark begrenzte Möglichkeiten bietet, strömungsoptimierte Rohrbögen zu verwirklichen, welche minimale Energiedissipation, also einen minimalen Druckabfall über die Rohrbogenlänge aufweisen.

Der Erfindung liegt somit die Aufgabe zugrunde, einen Rohrbogen bereitzustellen, welcher gegenüber den nach dem Stand der Technik bekannten Rohrbögen, insbesondere bezüglich des zwangsläufig zwischen Rohrbogeneingang und Rohrbogenausgang entstehenden Druckverlustes, optimiert ist.

Diese Aufgabe wird durch einen Rohrbogen nach Anspruch 1 gelöst. Vorteilhafte Ausgestaltungen sind Gegenstand der Unteransprüche.

In Verbindung mit dem Oberbegriff des Patentanspruchs 1 besteht die erfindungsgemäße Lösung darin, dass eine gekrümmte erste Wand und eine gekrümmte zweite Wand eines Rohrbogens durch ihren relativen Verlauf zueinander in Strömungsrichtung zunächst eine Verringerung der Rohrbogenquerschnittsfläche, danach eine Vergrößerung der Rohrbogenquerschnittsfläche und zuletzt eine weitere Verringerung der Rohrbogenquerschnittsfläche vorgeben, wobei sich die Krümmungsrichtung sowohl der ersten Wand als auch der zweiten Wand zumindest einmal umkehrt.

Erfindungsgemäße Rohrbögen weisen somit bezüglich des zu erwartenden Fluidgeschwindigkeitsprofils im Inneren des Rohrbogens das Merkmal auf, dass der in den Rohrbogeneingang eingeleitete Fluidstrom durch die zunächst bereitgestellte Vergrößerung des Rohrbogenquerschnitts einem verringerten Druckgradienten ausgesetzt wird, wodurch sich seine Geschwindigkeit verringert. Daraufhin ist es nun möglich, den verlangsamten Volumenstrom durch Vorgabe der Rohrbogenwände mit im Radius vergrößerten Krümmungen kontinuierlich umzulenken, um mit Annäherung an die Zielströmungsrichtung die Verringerung des Rohrbogenquerschnitts einzuleiten, zum Beispiel so weit, bis Rohrbogeneingangsquerschnitt und Rohrbogenausgangsquerschnitt übereinstimmen.

Beim erfindungsgemäßen Rohrbogen ist zur Optimierung des Strömungsverhaltens der ersten Vergrößerung des Rohrbogenquerschnitts hinter dem Rohrbogeneingang noch eine zusätzliche Verringerung des Rohrbogenquerschnitts in Strömungsrichtung vorangestellt. Eine solche zusätzliche Verringerung des Rohrbogenquerschnitts kann zum Beispiel dadurch erreicht werden, dass eine Rohrbogenwand nur unwesentlich gekrümmt ist und die andere eine ausgeprägtere Krümmung in Richtung der nur unwesentlich gekrümmten Wand aufweist. Dies ist beispielsweise dadurch realisierbar, dass zumindest eine von erster und zweiter Wand die Krümmungsrichtung ein weiteres Mal, also insgesamt zumindest zweimal, umkehrt.

Im Vergleich zu vielen nach dem Stand der Technik bekannten unvorteilhaften Rohrbögen mit sehr kleinen bis verschwindenden Krümmungsradien einer ersten Rohrbogenwand, weist ein erfindungsgemäßer Rohrbogen stets von Null verschiedene Rohrbogenwandradien auf.

Zur Verwirklichung der erfindungsgemäßen Rohrbögen mit optimiertem Strömungsverhalten kann es darüber hinaus sinnvoll sein, dass zumindest teilweise sich gegenüberliegende Abschnitte von erster Wand und zweiter Wand eine Krümmung entgegengesetzer Richtung aufweisen. Es kann also je nach Ausführungsform der vorliegenden Erfindung realisiert sein, dass sich gegenüberliegende Abschnitte von erster und zweiter Wand eine Vergrößerung des Rohrbogenquerschnittes erzeugen, indem diese eine entgegengesetzte Krümmung aufweisen, oder dadurch, dass gegenüberliegende Abschnitte von erster und zweiter Wand zwar die gleiche Krümmungsrichtung aufweisen, diese jedoch derart unterschiedlich gewählt sind, dass sich der Rohrbogenquerschnitt effektiv vergrößert.

Analoge Überlegungen können natürlich auch bezüglich einer Verringerung des Rohrbogenquerschnitts vorgenommen werden.

Es sei angemerkt, dass die Bestimmung der exakten Ausprägung der oben erwähnten Merkmale eines erfindungsgemäßen Rohrbogens je nach Anwendung und in Abhängigkeit des realisierten Volumenstroms, des transportierten Mediums sowie des zu adaptierenden Rohrleitungssystems, eine Anpassung der erfindungsgemäßen Merkmale an die explizite Ausführungsform mittels bekannter Simulationstechniken voraussetzt, wenn angestrebt ist, eine maximale Optimierung zu erreichen. Nichtsdestotrotz weisen aber auch standardisierte Ausführungsformen des vorliegenden Erfindungsgegenstandes einen im Vergleich zu herkömmlichen Rohrbögen deutlich verringerten Druckverlust zwischen Rohrbogeneingang und Rohrbogenausgang auf.

Die vorliegende Erfindung offenbart somit Ausführungsformen von Rohrbögen, welche grundsätzlich alle Merkmale enthalten, um einen in der Praxis anwendbaren und in seinem Strömungsverhalten optimierten Rohrbogen mit vorgegebenem Eingangs- und Ausgangsquerschnitt zu realisieren.

Insbesondere für die Substitution von vorhandenen konventionellen 90°-Rohrbögen sieht eine vorteilhafte Ausführungsform der vorliegenden Erfindung vor, dass die von Rohrbogeneingang und Rohrbogenausgang definierten Rohrbogenquerschnittsflächen senkrecht zueinander angeordnet sind.

Da die Verwendung der erfindungsgemäßen Rohrbögen in vorhandenen Rohrleitungssystemen vorgesehen ist, wobei die gegebenen Rohrleitungen in der Regel starr und gerade ausgeführt sind, sieht eine besonders vorteilhafte Ausführungsform der Erfindung vor, dass der Rohrbogen zusätzlich zumindest in der unmittelbaren Umgebung von zumindest einem von Rohrbogeneingang und Rohrbogenausgang einen ungekrümmten Abschnitt der ersten und zweiten Wand aufweist. Zur Aufnahme der vorhandenen Rohrleitung kann ein erfindungsgemäßer Rohrbogen darüber hinaus entweder an seinem Eingang oder seinem Ausgang oder an beidem eine an das vorhandene Rohrsystem angepasste Muffe zur Aufnahme eines Rohres aufweisen.

Zur weiteren Optimierung von erfindungsgemäßen Rohrbögen ist darüber hinaus denkbar, dass ein solcher Rohrbogen zusätzlich zumindest ein starres Fluid-Leitelement im Innern aufweist, wobei das zumindest eine Fluid-Leitelement, sofern möglich, zumindest parallel zu einem von erster Wand und zweiter Wand angeordnet ist.

Die voran beschriebenen erfindungsgemäßen Rohrbögen haben sich als besonders effektiv herausgestellt, wenn sie in Form von Flachkanälen realisiert sind, wobei insbesondere bei diesen, aber generell auch bei den voran beschriebenen Rohrbögen die Variation der Rohrbogenquerschnittsfläche unter Konstanthaltung einer Abmessung der Rohrbogenquerschnittsfläche erreicht wird. In der Regel ist dies zum Beispiel im Falle von Flachkanälen die Rohrbogenhöhe, welche entlang derjenigen Achse bemessen ist, welche in der Ebene der gekrümmten Rohrbogenwände verläuft.

Es ist darüber hinaus auffällig, dass sämtliche Ausführungsformen einen mehr oder weniger stark ausgeprägten schwanenhalsförmigen Rohrbogenverlauf aufweisen.

Weitere Einzelheiten der Erfindung werden in den Zeichnungen anhand von schematisch dargestellten Ausführungsbeispielen beschrieben.

Hierbei zeigt:
- Figur 1: einen Rohrbogen in der Draufsicht,
- Figur 2: eine perspektivische Darstellung eines Rohrbogens,
- Figur 3: eine perspektivische Darstellung eines Rohrbogens mit quadratischem Querschnitt,
- Figur 4: einen Symmetrievergleich zwischen einem erfindungsgemäßen und einem herkömmlichen Rohrbogen,
- Figur 5: Formgebungen von sieben verschiedenen Optimierungsstufen eines erfindungsgemäßen Rohrbogens im Vergleich zu einem herkömmlichen Rohrbogen,
- Figur 6: eine exemplarische Darstellung der erreichbaren Druckverlustverringerung,
- Figur 7: einen Vergleich der Strömungsprofile in herkömmlichen und erfindungsgemä-βen Rohrbögen.

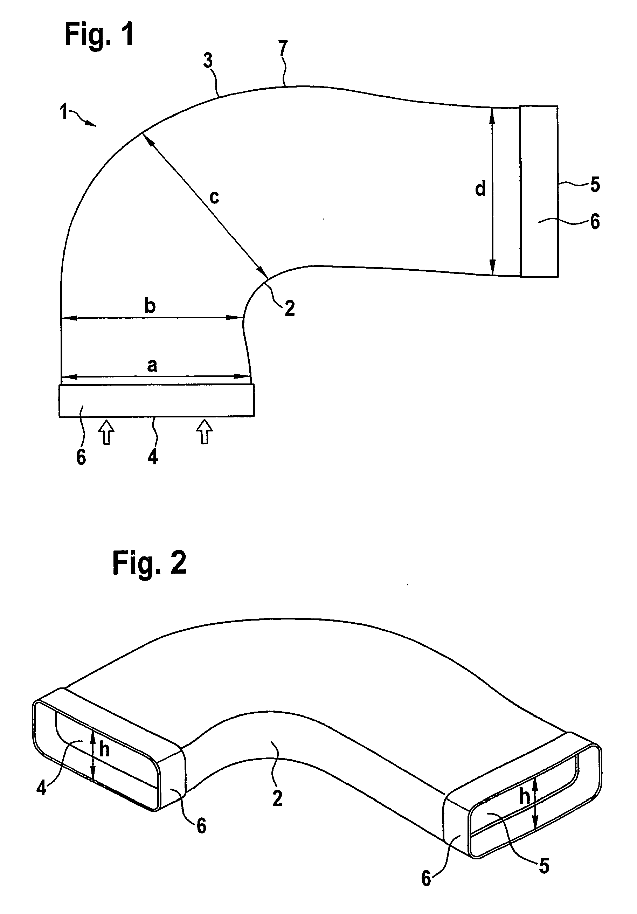

In Figur 1 ist eine Draufsicht eines erfindungsgemäßen Rohrbogens 1 dargestellt, welcher eine erste Wand 2, eine zweite Wand 3, einen Rohrbogeneingang 4, einen Rohrbogenausgang 5 sowie an beiden Rohrbogenenden jeweils eine Muffe 6 und einen Rohrbogenscheitelpunkt 7 aufweist. Des weiteren sind vier Rohrbogendimensionen "a", "b", "c" und "d" dargestellt, welche eine Abmessung des Rohrbogens 1 in der Zeichnungsebene angeben, wobei diese ohne weiteres als die Beabstandung von erster Wand 2 und zweiter Wand 3 angesehen werden können. Da erfindungsgemäße Rohrbögen eine Vorzugsrichtung bezüglich der Strömungsrichtung des eingeleiteten Fluides zur Erreichung der bestmöglichen Strömungsoptimierung aufweisen, indizieren zwei Pfeile in der Nähe des Rohrbogeneingangs 4 die erfindungsgemäß sinnvolle Strömungsrichtung. Im Übrigen legen auch die Bezeichnungen Rohrbogeneingang 4 und Rohrbogenausgang 5 in Verbindung mit den entsprechenden Bezugszeichen in der Figur eine eindeutige Strömungsrichtung fest. Wie man der Figur 1 leicht entnehmen kann, stellt der darin offenbarte Rohrbogen 1 einen strömungsoptimierten Ersatz für konventionelle 90°-Rohrbögen dar, wozu auch sinnvollerweise die von Rohrbogeneingang 4 und Rohrbogenausgang 5, bzw. den angeschlossenen Muffen 6 definierten Querschnittsflächen senkrecht aufeinanderstehen, was meist eine notwendige Voraussetzung darstellt, erfindungsgemäße Rohrbögen 1 in vorhandene Rohrleitungssysteme zu integrieren.

Betrachtet man nun den relativen Verlauf von erster Rohrbogenwand 2 und zweiter Rohrbogenwand 3 zueinander, so fällt, ausgehend vom Rohrbogeneingang 4, also in Richtung des zu erwartenden Volumenstroms, auf, dass die zweite Rohrbogenwand 3 zunächst unmittelbar hinter der Muffe 6 einen im wesentlichen ungekrümmten Rohrbogenwandabschnitt aufweist, während dessen der gegenüberliegende Abschnitt der ersten Wand eine deutliche Krümmung aufweist, derart, dass sich die zweite Rohrbogenwand 3 und die erste Rohrbogenwand 2 von einer Beabstandung "a" auf eine Beabstandung "b" annähern. Es ist auch ersichtlich, dass ungefähr in dem Bereich, wo die zweite Wand 3 und die erste Wand 2 die Beabstandung "b" erreichen, die Krümmung der ersten Wand 2 einen Wendepunkt aufweist und dementsprechend ihre Krümmungsrichtung umkehrt, während dessen die zweite Wand 3 mit weiterem Verlauf in Strömungsrichtung eine mehr und mehr ausgeprägte Krümmung in Richtung der Krümmung der ersten Wand 2 aufweist, wobei die Krümmung der zweiten Wand 3 einen Krümmungsradius aufweist, welcher in Relation zu dem Radius der ersten Wand derart gewählt ist, dass sich die Beabstandung von der ersten Wand 2 von der zweiten Wand 3 im Bereich der eigentlichen Volumenstromumlenkung mehr und mehr aufweitet und dabei zum Beispiel an der eingezeichneten Stelle eine Beabstandung "c" erreicht. Folglich ist also die Umlenkung des Volumenstroms damit verbunden, dass gleichzeitig der Rohrbogenquerschnitt aufweitet, wodurch sich wiederum die Strömungsgeschwindigkeit aufgrund des verringerten Druckgradienten absenkt, was zur Folge hat, dass der verlangsamte Volumenstrom in Verbindung mit der von den Rohrbogenwänden 2, 3 vorgegebenen Führung in geringerem Maße zur Bildung von Wirbeln und Querströmen tendiert, und darüber hinaus auch zusätzlich Druckabfälle verursachende Wandreibung minimiert wird.

Im weiteren Verlauf des Rohrbogens 1 ist nun zu erkennen, wie der Rohrbogenverlauf derart gewählt ist, dass mit abnehmender Rohrkrümmung, also in den Bereichen, wo die Strömungsablenkung mehr oder weniger vollständig vollzogen ist, sich die erste Rohrbogenwand 2 und die zweite Rohrbogenwand 3 bis zu einer Beabstandung "d" annähern, wobei ohne Beschränkung der Allgemeinheit die Querschnittsfläche am Rohrbogeneingang 4 mit der Querschnittsfläche am Rohrbogenausgang 5 übereinstimmen kann, sofern beabsichtigt ist, den erfindungsgemäßen Rohrbogen 1 zum Beispiel mittels der Muffen 6 an beiden Enden mit einer Rohrleitung äquivalenter Dimensionierung in Verbindung zu bringen.

Des weiteren ist Figur 1 zu entnehmen, dass die Krümmung der ersten Rohrbogenwand 2 neben dem ersten Umkehrpunkt ungefähr auf Höhe der Beabstandung "b" einen zweiten, weniger ausgeprägten Umkehrpunkt im Bereich zwischen der Beabstandung "c" und der Beabstandung "d" aufweisen kann. Im Vergleich dazu weist die Krümmung der zweiten Rohrbogenwand 3 einen einzigen Umkehrpunkt zwischen der Beabstandung "c" und der Beabstandung "d" auf.

Figur 2 zeigt eine perspektivische Darstellung eines erfindungsgemäßen Rohrbogens 1, wobei dieser unter Konstanthaltung der eingezeichneten Dimension "h", z. B. unter Konstanthaltung der Rohrbogenhöhe, realisiert worden ist. Es wird also deutlich, dass bei einer solchen Ausführungsform die erfindungsgemäße Rohrbogenquerschnittsvergrößerung zur Verlangsamung des Volumenstroms ausschließlich durch Variation der Beabstandung von erster Rohrbogenwand 2 und zweiter Rohrbogenwand 3 umgesetzt worden ist.

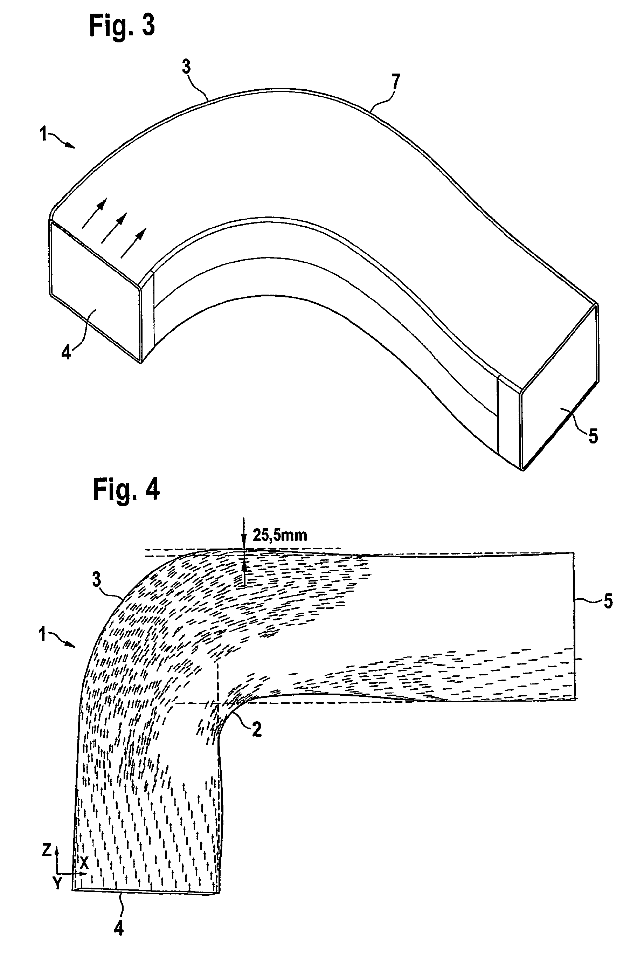

Figur 3 zeigt einen erfindungsgemäßen Rohrbogen 1 mit quadratischem Querschnitt. Der hier dargestellte Rohrbogen 1 zeigt, dass auch unter Berücksichtigung leichter Modifikationen der in Figuren 1 und 2 dargestellten Rohrbögen 1, aber unter Beibehaltung aller erfindungsrelevanten Merkmale, das beabsichtigte optimierte Strömungsverhalten erreicht werden kann. Auch bei diesem Rohrbogen 1 ist sichtbar, wie sich die Beabstandung der erste Rohrbogenwand 2 zur zweiten Rohrbogenwand 3 in der Nähe des Rohrbogeneingangs 4 im weiteren Verlauf in Richtung zweiter Rohrbogenwand 3 zunächst aufweitet und dann wieder zusammengeführt wird, wobei jedoch eine leicht modifizierte Führung von erster Wand 2 und zweiter Wand 3 gewählt worden ist. Nichtsdestotrotz weist auch diese Ausführungsform den bereits aus Figuren 1 und 2 bekannten im Wesentlichen schwanenhalsförmigen Verlauf auf. Dieser ist insbesondere dadurch ausgeprägt, dass der Rohrbogenscheitelpunkt 7 der zweiten Wand 3 oberhalb der Endposition der zweiten Wand 3 im Bereich des Rohrbogenausgangs 5 liegt. Bei konventionellen 90°-Rohrbögen existiert in der Regel kein ausgewiesener Rohrbogenscheitelpunkt.

Figur 4 zeigt einen erfindungsgemäßen Rohrbogen 1 im Querschnitt, wobei die Abweichungen von dem Verlauf eines herkömmlichen Rohrbogens eingezeichnet sind. Hierbei wird von einem herkömmlichen Rohrbogen ausgegangen, welcher einen Querschnitt von ca. 89 · 222 mm² sowie an einer ausgewiesenen Stelle auf der ersten Wand 2 einen Knick mit Radius 0 mm aufweist, so dass im Wesentlichen die beiden durch den Knick getrennten Teilabschnitte der ersten Rohrbogenwand 2 senkrecht aufeinanderstehen. Die beispielhafte Optimierung wurde unter Annahme eines Volumenstroms von 300 m³/h vorgenommen. Es wird ersichtlich, dass bereits vergleichsweise kleine Abweichungen von der Urform eines konventionellen Rohrbogens, wie oben beschrieben, die Realisierung eines erfindungsgemäß optimierten Rohrbogens 1 ermöglichen. In der hier dargestellten Figur ist die Form eines herkömmlichen Rohrbogens durch die gestrichelten Linien angedeutet und es wird sichtbar, dass die Optimierung insbesondere beinhaltet, der zweiten Rohrbogenwand 3 eine leichte Überhöhung und damit einen ausgeprägten Scheitelpunkt 7 zu verleihen und auf der gegenüberliegenden Seite, leicht in Richtung Rohrbogenausgang 5 verschoben, die erste Wand 2, wie eingezeichnet, in Richtung geringerer Beabstandung zur zweiten Wand 3 zu modifizieren. Insbesondere diese beiden Merkmale tragen auch zu der schwanenhalsförmigen Erscheinung eines erfindungsgemäßen Rohrbogens 1 bei.

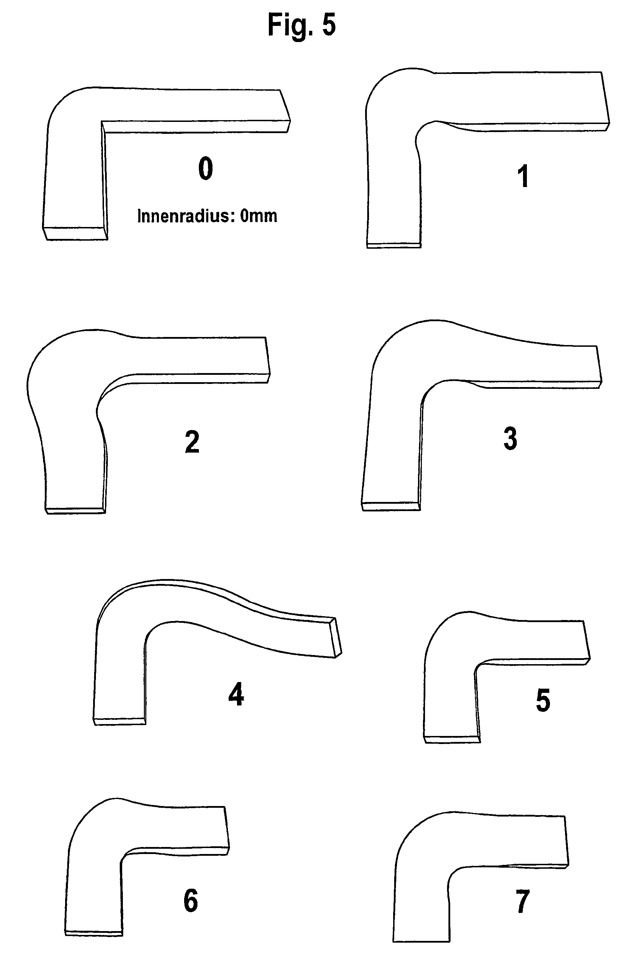

Figur 5 zeigt eine schrittweise Optimierung eines erfindungsgemäßen Rohrbogens, ausgehend von einem Rohrbogen mit einem ersten Radius von 0 mm, in der Figur mit "0" bezeichnet. Es ist wiederum sichtbar, dass schon leichte Abweichungen von der Urform, mit dem Ziel, den Druckverlust zwischen Rohrbogeneingang und Rohrbogenausgang zu verringern, dazu führen, dass ein optimierter Rohrbogen einen zumindest ansatzweise erkennbaren schwanenhalsförmigen Verlauf von erster und zweiter Wand aufweist. Besonders ausgeprägt wird dieser in der Optimierungsstufe "4". Es ist auch bei vielen der hier dargestellten Optimierungsstufen erkennbar, wie der bereits in Figur 1 für einen optimalen Rohrbogen 1 dargestellte Verlauf von erster Wand 2 und zweiter Wand 3 zumindest qualitativ wiedergefunden werden kann, wobei die quantitative Ausprägung der entscheidenden Merkmale mitunter stark variiert. Darüber hinaus weisen manche der dargestellten Optimierungsstufen gegenüber dem in Figur 1 dargestellten Rohrbogen 1 zusätzliche Merkmale auf, die ebenfalls zu der erfindungsgemä-βen Optimierung beitragen. Beispielsweise sei der Rohrbogen "2" erwähnt, bei welchem die zweite Rohrbogenwand im Bereich in Strömungsrichtung hinter dem Rohrbogeneingang und bevor die eigentliche Umlenkung des Volumenstromes in Richtung Rohrbogenausgang realisiert wird, eine deutliche Krümmung nach außen, also weg vom Rohrbogenausgang, aufweist.

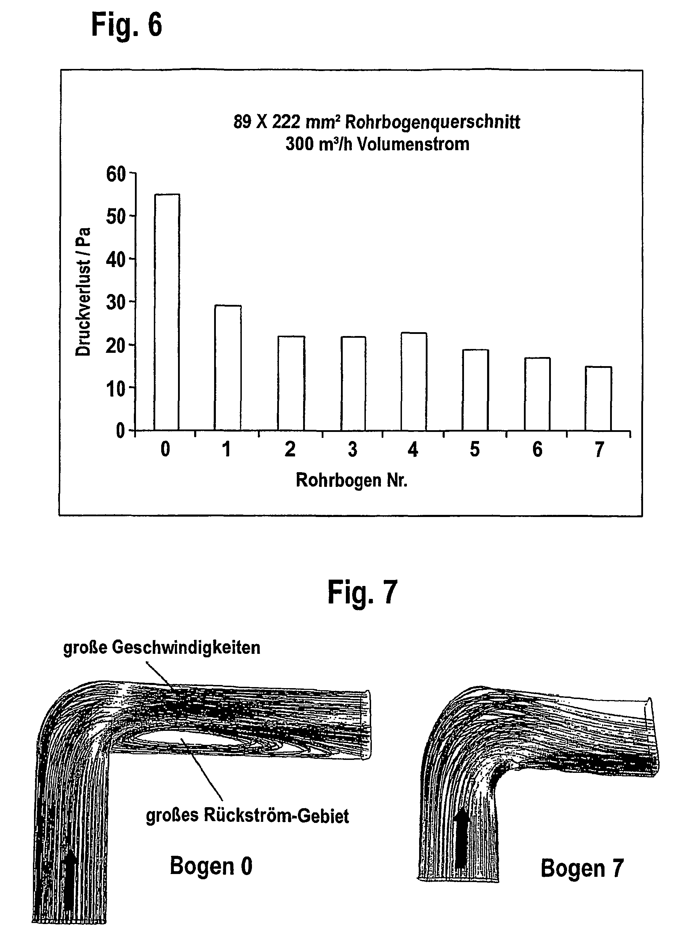

Figur 6 zeigt die quantitativ erreichbare Druckverlustminderung der in Figur 5 dargestellten Ausführungsformen. Quantitativ sei zunächst erwähnt, dass zwischen dem herkömmlichen Rohrbogen "0" und dem optimalen Rohrbogen "7" eine Druckverlustminderung von 73 % liegt. Bei Betrachtung der einzelnen Messwerte wird sichtbar, dass die zwischen den einzelnen Optimierungsstufen realisierte Druckverlustminderung allein von Rohrbogen "4" gebrochen wird, wobei dieser am wenigstens ausgeprägt die erfindungsgemäße Abfolge von Aufweitung der Beabstandung von erster Rohrbogenwand und zweiter Rohrbogenwand und Wiederannäherung der Beabstandung von erster und zweiter Rohrbogenwand aufweist.

Figur 7 zeigt das simulierte Strömungsverhalten eines herkömmlichen Rohrbogens "0" im Vergleich zu einem optimierten Rohrbogen "7". Es ist zu sehen, dass der herkömmliche Rohrbogen mit Radius 0 mm der zweiten Wand im Rohrbogenbereich hinter der Volumenstromablenkung ein ausgeprägtes Rückströmgebiet und daraus resultierende Wirbelbildung zeigt. Da der Nettovolumenstrom jedoch erhalten sein muss, führt die Bildung solcher Rückströmgebiete dazu, dass die verbleibende Rohrbogenquerschnittsfläche von einem Volumenstrom hoher Dichte und mit hohen Geschwindigkeiten durchsetzt wird. Im Vergleich dazu zeigt der erfindungsgemäß optimierte Rohrbogen "7" ein vergleichbar homogenes Strömungsprofil auf, was auf laminare Strömung hinweist, wobei Rückströmgebiete und Wirbelbildung unterdrückt und damit Wandreibung reduziert und insgesamt somit auch der Druckverlust zwischen Rohrbogeneingang und Rohrbogenausgang minimiert wird.

### Bezugszeichenliste

- 1: Rohrbogen
- 2: erste Wand
- 3: zweite Wand
- 4: Rohrbogeneingang
- 5: Rohrbogenausgang
- 6: Muffe
- 7: Rohrbogenscheitelpunkt

## Patentansprüche

1. Rohrbogen (1) für Fluidkanäle, mit einer ersten Wand (2) variierender Krümmung, mit einer der ersten Wand (2) gegenüberliegenden zweiten Wand (3) variierender Krümmung und mit einer variierenden Querschnittsfläche, wobei die Krümmung der ersten Wand (2) und die Krümmung der zweiten Wand (3) darauf ausgelegt sind, einen für ein den Rohrbogen durchströmendes Fluid minimalen Druckverlust zwischen einem Rohrbogeneingang (4) und einem Rohrbogenausgang (5) zu bewirken, **dadurch gekennzeichnet, dass** die gekrümmte erste Wand (2) und die gekrümmte zweite Wand (3) durch ihren relativen Verlauf zueinander in Strömungsrichtung zunächst eine Verringerung der Rohrbogenquerschnittsfläche, danach eine Vergrößerung der Rohrbogenquerschnittsfläche und zuletzt eine weitere Verringerung der Rohrbogenquerschnittsfläche vorgeben, wobei sich die Krümmungsrichtung sowohl der ersten Wand (2) als auch der zweiten Wand (3) zumindest einmal umkehrt.

2. Rohrbogen (1) nach Anspruch 1, **dadurch gekennzeichnet, dass** zumindest teilweise sich gegenüberliegende Abschnitte der ersten Wand (2) und der zweiten Wand (3) eine Krümmung entgegengesetzter Richtung aufweisen.

3. Rohrbogen (1) nach einem der vorangegangenen Ansprüche, **dadurch gekennzeichnet, dass** die von Rohrbogeneingang (4) und Rohrbogenausgang (5) definierten Rohrbogenquerschnittsflächen senkrecht zueinander angeordnet sind.

4. Rohrbogen (1) nach einem der vorangegangenen Ansprüche, **dadurch gekennzeichnet, dass** dieser zusätzlich zumindest in der unmittelbaren Umgebung von zumindest einem von Rohrbogeneingang (4) und Rohrbogenausgang (5) einen ungekrümmten Abschnitt der ersten und zweiten Wand aufweist.

5. Rohrbogen (1) nach Anspruch 1, **dadurch gekennzeichnet, dass** die zusätzliche Verringerung des Rohrbogenquerschnitts dadurch erreicht wird, dass ein Rohrbogenwandabschnitt im Vergleich zum gegenüberliegenden Rohrbogenwandabschnitt weniger stark gekrümmt ist und der stärker gekrümmte Rohrbogenabschnitt in Richtung des weniger stark gekrümmten Rohrbogenwandabschnitts gekrümmt ist.

6. Rohrbogen (1) nach einem der vorangegangenen Ansprüche, **dadurch gekennzeichnet, dass** zumindest eine von erster und zweiter Wand (2, 3) die Krümmungsrichtung zwischen Rohrbogeneingang (4) und Rohrbogenausgang (5) zumindest zweimal umkehrt.

7. Rohrbogen (1) nach einem der vorangegangenen Ansprüche, **dadurch gekennzeichnet, dass** dieser zusätzlich zumindest ein starres Fluid-Leitelement im Innern aufweist, wobei das zumindest eine Fluid-Leitelement parallel zu zumindest einem von erster Wand (2) und zweiter Wand (3) angeordnet ist.

8. Rohrbogen (1) nach einem der vorangegangenen Ansprüche, **dadurch gekennzeichnet, dass** die Variation der Rohrbogenquerschnittsfläche unter Konstanthaltung einer Abmessung der Rohrbogenquerschnittsfläche erreicht wird.

9. Rohrbogen (1) nach einem der vorangegangenen Ansprüche, **dadurch gekennzeichnet, dass** der Rohrbogen (1) einen schwanenhalsförmigen Verlauf aufweist, wobei ein Rohrbogenscheitelpunkt (7) der zweiten Rohrbogenwand (3) bezüglich einer Achse oberhalb der Position der zweiten Rohrbogenwand (3) am Rohrbogenausgang (5) liegt.

10. Rohrbogen (1) nach einem der vorangegangenen Ansprüche, **dadurch gekennzeichnet, dass** der Rohrbogen (1) zumindest an einem von Rohrbogeneingang (4) und Rohrbogenausgang (5) eine Muffe (6) zur Aufnahme eines Rohres aufweist.

## Claims

1. A pipe elbow (1) for fluid ducts, comprising a first wall (2) of varying curvature, comprising a second wall (3), opposite to said first wall (2), of varying curvature, and comprising a varying cross-sectional surface, wherein the curvature of the first wall (2) and the curvature of the second wall (3) are selected such that for a fluid flowing through the pipe elbow minimal pressure loss occurs between the pipe elbow inlet (4) and the pipe elbow outlet (5), **characterized in that** the curved first wall (2) and the curved second wall (3) by the relative courses thereof to each other in the flow direction at first define a reduction of the pipe elbow cross-sectional surface, then an enlargement of the pipe elbow cross-sectional surface and finally a reduction of the pipe elbow cross-sectional surface, wherein the curvature direction both of the first wall (2) and the second wall (3) reverses at least once.

2. The pipe elbow (1) of claim 1, **characterized in that** at least partly opposing sections of said first wall (2) and said second wall (3) comprise curvatures of opposite direction.

3. The pipe elbow (1) of any of the preceding claims **characterized in that** pipe elbow cross-sections defined by pipe elbow inlet (4) and pipe elbow outlet (5) are arranged perpendicular to another.

4. The pipe elbow (1) of any of the preceding claims **characterized in that** it comprises additionally, at least in the immediate area of at least one of pipe elbow inlet (4) and pipe elbow outlet (5), a non-curved section of said first and second walls.

5. The pipe elbow (1) of claim 1, **characterized in that** the additional reduction of the pipe elbow cross-section is achieved **in that** one pipe elbow wall section is less curved compared to an opposing pipe elbow wall section and the pipe elbow section which is more curved, is curved towards the pipe elbow section which is less curved.

6. The pipe elbow (1) of any of the preceding claims **characterized in that** at least one of first and second walls (2, 3) reverses the curvature direction between pipe elbow input (4) and pipe elbow outlet (5) at least twice.

7. The pipe elbow (1) of any of the preceding claims **characterized in that** it additionally comprises at least one rigid fluid deflection element in its interior, wherein said at least one rigid fluid deflection element is arranged parallel to at least one of first wall (2) and second wall (3).

8. The pipe elbow (1) of any of the preceding claims **characterized in that** variation of the pipe elbow cross-section surface is achieved by keeping constant one dimension of the pipe elbow cross-section surface.

9. The pipe elbow (1) of any of the preceding claims **characterized in that** the pipe elbow comprises a goose-neck shaped course, wherein a pipe elbow apex (7) of the second pipe elbow wall (3) lies with respect to an axis above the position of the second pipe elbow wall (3) at the pipe elbow outlet (5).

10. The pipe elbow (1) of any of the preceding claims **characterized in that** the pipe elbow (1) comprises a sleeve (6) for receiving a pipe at at least one of pipe elbow inlet (4) and pipe elbow outlet (5).

## Revendications

1. Coude de tuyau (1) pour canaux de fluide, comprenant une première paroi (2) de courbure variable, une deuxième paroi (3), opposée à la première paroi (2), de courbure variable et à superficie de section variable, dans lequel la courbure de la première paroi (2) et la courbure de la deuxième paroi (3) sont conçues pour provoquer une perte de charge minimale pour le fluide passant par le coude de tuyau entre une entrée de coude de tuyau (4) et une sortie de coude de tuyau (5), **caractérisé en ce que** la première paroi courbe (2) et la deuxième paroi courbe (3) spécifient par leur tracé relatif l'une par rapport à l'autre dans le sens d'écoulement d'abord une réduction de la superficie de section du coude de tuyau, ensuite une augmentation de la superficie de section du coude de tuyau, et enfin une autre réduction de la superficie de section du coude de tuyau, dans lequel le sens de courbure aussi bien de la première paroi (2) que de la deuxième paroi (3) est inversé au moins une fois.

2. Coude de tuyau (1) selon la revendication 1, **caractérisé en ce que** des sections au moins partiellement opposées de la première paroi (2) et de la deuxième paroi (3) présentent une courbure de sens contraire.

3. Coude de tuyau (1) selon l'une quelconque des revendications précédentes, **caractérisé en ce que** les superficies de section du coude de tuyau définies par l'entrée de coude de tuyau (4) et la sortie de coude de tuyau (5) sont disposées perpendiculairement l'une par rapport à l'autre.

4. Coude de tuyau (1) selon l'une quelconque des revendications précédentes, **caractérisé en ce qu'**il présente de plus au moins à proximité immédiate d'au moins l'une de l'entrée de coude de tuyau (4) et de la sortie de coude de tuyau (5) une section non courbe de la première et de la deuxième paroi.

5. Coude de tuyau (1) selon la revendication 1, **caractérisé en ce que** la réduction supplémentaire de la superficie de section du coude de tuyau est obtenue **en ce qu'**une section de paroi du coude de tuyau est moins fortement courbée en comparaison avec la section de paroi du coude de tuyau opposée, et la section de coude de tuyau plus fortement courbée est courbée en direction de la section de paroi du coude de tuyau moins fortement courbée.

6. Coude de tuyau (1) selon l'une quelconque des revendications précédentes, **caractérisé en ce qu'**au moins l'une de la première et de la deuxième paroi (2, 3) inverse au moins deux fois le sens de courbure entre l'entrée de coude de tuyau (4) et la sortie de coude de tuyau (5).

7. Coude de tuyau (1) selon l'une quelconque des revendications précédentes, **caractérisé en ce qu'**il présente de plus à l'intérieur au moins un élément de guidage de fluide rigide, dans lequel ledit au moins un élément de guidage de fluide est disposé en parallèle à au moins l'une de la première paroi (2) et de la deuxième paroi (3).

8. Coude de tuyau (1) selon l'une quelconque des revendications précédentes, **caractérisé en ce que** la variation de la superficie de section du coude de tuyau est obtenue tout en maintenant constante une dimension de la superficie de section du coude de tuyau.

9. Coude de tuyau (1) selon l'une quelconque des revendications précédentes, **caractérisé en ce que** le coude de tuyau (1) présente un tracé en col de cygne, dans lequel un sommet de coude de tuyau (7) de la deuxième paroi de coude de tuyau (3) se situe à la sortie de coude de tuyau (5) par rapport à un axe en amont de la position de la deuxième paroi de coude de tuyau (3).

10. Coude de tuyau (1) selon l'une quelconque des revendications précédentes, **caractérisé en ce que** le coude de tuyau (1) présente un manchon (6) pour recevoir un tuyau, au moins à l'une de l'entrée de coude de tuyau (4) et de la sortie de coude de tuyau (5).
